# EUROPEAN PATENT APPLICATION

(11) **EP 4 289 896 A1**
(43) Date of publication of application: **13.12.2023**
(21) Application number: 22749441.6
(22) Date of filing: 14.01.2022
(51) Int. Cl.: C08K 5/098, C08K 5/136, C08L 25/06, C08J 9/04

(54) **FLAME RETARDANT COMPOSITION FOR FOAMED STYRENE RESIN, FLAME-RETARDANT FOAMED STYRENE-BASED RESIN COMPOSITION, AND EXTRUSION FOAM-MOLDED PRODUCT OF SAME**

(30) Priority: 04.02.2021 JP 2021016840
(71) Applicant: DKS Co. Ltd., Kyoto-shi, Kyoto 600-8873 (JP)
(72) Inventor: MORISHITA, Ken, Kyoto-shi, Kyoto 600-8873 (JP); AKIYAMA, Koichi, Kyoto-shi, Kyoto 600-8873 (JP); HOSHI, Ginga, Kyoto-shi, Kyoto 600-8873 (JP)
(74) Representative: Hoffmann Eitle
(86) International application number: PCT/JP2022/001014
(87) International publication number: WO 2022/168564

(57) **Abstract**

Provided are a flame retardant composition for expandable styrene resin that can be used to produce a foamed molded article having excellent flame retardancy and excellent heat resistance, a flame-retardant expandable styrene-based resin composition, and an extrusion-foamed molded article of the styrene-based resin composition. The flame retardant composition for expandable styrene resin of the present invention comprises at least tetrabromobisphenol A-bis(2,3-dibromo-2-methylpropyl ether) as a component (B1), fatty acid zinc as a component (C), and a fatty acid metal salt, excluding the component (C), as a component (D), the component (C) being contained in an amount of 0.1 to 15 parts by mass based on 100 parts by mass of the component (B1), and the component (D) being contained in an amount of 1 to 35 parts by mass based on 100 parts by mass of the component (B1).

## Description

### Technical Field

The present invention relates to a flame retardant composition for expandable styrene resin, a flame-retardant expandable styrene-based resin composition, and an extrusion-foamed molded article of the composition.

### Background Art

Styrene-based resin foamed articles, which are lightweight, have been used in various applications, including heat insulation applications for home electrical appliances, building materials, or the like, and civil engineering applications such as an embankment method. Styrene-based resins are made of carbon and hydrogen alone, and burn intensely with generation of black smoke once ignited. For this reason, a flame retardant must be used to impart flame retardancy to the resins depending on the application of styrene-based resin foamed articles.

Hexabromocyclododecane (HBCD) has been used as a flame retardant to impart flame retardancy to styrene-based resin foamed articles produced by an extrusion method, and it is known that a desired flame retardancy effect can be obtained with a relatively small amount of HBCD. On the other hand, HBCD has low heat stability; thus, when a resin composition containing HBCD is heated to or above the melting temperature, HBr produced by decomposition of HBCD colors the resin, degrading its quality, and can also promote corrosion of manufacturing equipment etc. Additionally, it is desirable that scraps of foamed articles and scraps generated during the production of foamed articles are recycled as a starting material for the production of new foamed articles. However, if a flame retardant with low heat stability, such as HBCD, is contained in scraps, it causes coloration when the scraps are melted, or promotes depolymerization. Thus, foamed articles containing HBCD have a problem that they are difficult to recycle.

From this point of view, the use of other bromine-based flame retardants in place of HBCD for styrene-based resin extrusion-foamed articles has recently been considered. As such a bromine-based flame retardant, tetrabromobisphenol A-bis(2,3-dibromo-2-methylpropyl ether) has been proposed. This flame retardant has a flame retardancy effect comparable to that of HBCD; however, in order to further improve the heat stability, it has been proposed to use the flame retardant in combination with another flame retardant, such as tetrabromobisphenol A-bis(2,3-dibromopropyl ether) or tris(2,3-dibromopropyl)isocyanurate. This suppresses the decomposition of the flame retardant and makes it less likely that the degradation of the resin will occur, while maintaining the excellent flame retardancy effect (see, for example, PTL 1 to PTL 3).

### Citation List

### Patent Literature

PTL 1: JP2010-275528A
PTL 2: JP2012-107227A
PTL 3: JP2012-136674A

### Summary of Invention

### Technical Problem

However, flame retardancy and heat resistance have a trade-off relationship with each other, and it is thus difficult to improve both properties at the same time. Various recent applications using styrene-based foamed molded articles require further improvement in the flame retardancy and heat resistance of the foamed articles. From this perspective, there is an urgent need to develop a flame retardant to further enhance the flame retardancy and heat resistance of foamed articles or to develop a resin composition for producing styrene-based resin foamed articles.

The present invention has been accomplished in view of the above. An object of the invention is to provide a flame retardant composition for expandable styrene resin that can be used to produce a foamed molded article with excellent flame retardancy and excellent heat resistance, a flame-retardant expandable styrene-based resin composition, and an extrusion-foamed molded article of the composition.

### Solution to Problem

The present inventors conducted extensive research to achieve the above object, and found that the object can be achieved by combining a specific flame retardant, fatty acid zinc, and a fatty acid metal salt. The invention has thus been accomplished.

Specifically, the present invention includes, for example, the subject matter described in the following items.

### Item 1

A flame retardant composition for expandable styrene resin, comprising at least the following components (B1), (C), and (D):
(B1) tetrabromobisphenol A-bis(2,3-dibromo-2-methylpropyl ether);
(C) fatty acid zinc; and
(D) a fatty acid metal salt, excluding the component (C),
   the component (C) being contained in an amount of 0.1 to 15 parts by mass based on 100 parts by mass of the component (B1), and
   the component (D) being contained in an amount of 1 to 35 parts by mass based on 100 parts by mass of the component (B1) .

### Item 2

The flame retardant composition for expandable styrene resin according to Item 1, wherein the flame retardant composition comprises a component (B2) as a flame retardant in addition to the component (B1), and the component (B2) is a bromine-containing flame retardant.

### Item 3

The flame retardant composition for expandable styrene resin according to Item 1 or 2, wherein the component (B2) comprises at least one member selected from the group consisting of tetrabromobisphenol A-bis(2,3-dibromopropyl ether), tris(2,3-dibromopropyl)isocyanurate, tris(tribromophenoxy)triazine, and brominated epoxy oligomer.

### Item 4

The flame retardant composition for expandable styrene resin according to Item 2 or 3, wherein the content of the component (B1) is 10 to 99 mass% based on the total amount of the component (B1) and the component (B2).

### Item 5

A flame-retardant expandable styrene-based resin composition comprising the flame retardant composition for expandable styrene resin according to any one of Items 1 to 4, and a styrene-based resin as a component (A).

### Item 6

An extrusion-foamed molded article of the flame-retardant expandable styrene-based resin composition according to Item 5.

### Advantageous Effects of Invention

By using the flame retardant composition for expandable styrene resin of the present invention, an extrusion-foamed molded article with excellent flame retardancy and excellent heat resistance can be produced. Moreover, an extrusion-foamed molded article obtained using a flame-retardant expandable styrene-based resin composition containing the flame retardant composition for expandable styrene resin has excellent flame retardancy and excellent heat resistance.

### Description of Embodiments

The following describes embodiments of the present invention in detail. In the present specification, the terms "comprise" and "contain" include the concepts of comprising, containing, consisting essentially of, and consisting of.

### 1. Flame Retardant Composition for Expandable Styrene Resin

The flame retardant composition for expandable styrene resin of the present invention contains at least the following components (B1), (C), and (D):
(B1) tetrabromobisphenol A-bis(2,3-dibromo-2-methylpropyl ether);
(C) fatty acid zinc; and
(D) a fatty acid metal salt, excluding the component (C).

In particular, the flame retardant composition for expandable styrene resin of the present invention contains the component (C) in an amount of 0.1 to 15 parts by mass based on 100 parts by mass of the component (B1), and the component (D) in an amount of 1 to 35 parts by mass based on 100 parts by mass of the component (B1).

By incorporating the flame retardant composition for expandable styrene resin of the present invention as a flame retardant into a styrene resin, an extrusion-foamed molded article with excellent flame retardancy and excellent heat resistance can be produced.

Below, the flame retardant composition for expandable styrene resin of the present invention is simply referred to as "the flame retardant composition," the flame-retardant expandable styrene-based resin composition comprising the flame retardant composition for expandable styrene resin of the present invention is simply referred to as "the styrene-based resin composition," and the extrusion-foamed molded article obtained by using the styrene-based resin composition is simply referred to as "the foamed molded article."

### Component (B1)

The component (B1) contained in the flame retardant composition is tetrabromobisphenol A-bis(2,3-dibromo-2-methylpropyl ether), which serves as a flame retardant. That is, the component (B1) is a bromine-based flame retardant.

The component (B1) can be produced by a known method or can be obtained from a commercial product or the like.

### Other Flame Retardants

The flame retardant composition may also contain a flame retardant other than the component (B1) as long as the effects of the present invention are not impaired. In this case, flame retardancy and heat resistance may be improved. An example of a flame retardant other than the component (B1) is a bromine-based flame retardant other than the component (B1). The bromine-based flame retardant is referred to below as "the component (B2) ."

Examples of the component (B2) include tetrabromobisphenol A-bis(2,3-dibromopropyl ether), tris(2,3-dibromopropyl)isocyanurate, tris(tribromophenoxy)triazine, tetrabromobisphenol S-bis(2,3-dibromopropyl ether), tetrabromobisphenol F-bis(2,3-dibromopropyl ether), tetrabromobisphenol A, hexabromobenzene, pentabromotoluene, polybromodiphenyl ether, polybromodiphenylethane, bispolybromophenoxyethane, polybromophenylindane, polypentabromobenzyl acrylate, ethylene bistetrabromophthalimide, tris(tribromoneopentyl)phosphate, brominated epoxy oligomer, and the like. The components (B2) may be used singly or in a combination of two or more.

The component (B2) preferably comprises at least one member selected from the group consisting of tetrabromobisphenol A-bis(2,3-dibromopropyl ether), tris(2,3-dibromopropyl)isocyanurate, tris(tribromophenoxy)triazine, and brominated epoxy oligomer, in terms of easily improving the flame retardancy and heat resistance of the foamed molded article of the flame retardant composition.

When the flame retardant composition contains both the component (B1) and the component (B2), the content ratio of the two is not particularly limited. For example, because the flame retardant composition can easily impart excellent flame retardancy, the content of the component (B1) is preferably 10 to 99 mass% based on the total mass of the component (B1) and the component (B2). The content of the component (B1) is preferably 20 mass% or more, more preferably 30 mass% or more, even more preferably 35 mass% or more, and particularly preferably 40 mass% or more, based on the total mass of the component (B1) and the component (B2). The content of the component (B1) is also preferably 90 mass% or less, more preferably 80 mass% or less, even more preferably 70 mass% or less, and particularly preferably 60 mass% or less, based on the total mass of the component (B1) and the component (B2).

The flame retardant composition may contain a flame retardant other than the component (B1) and the component (B2). Examples include a wide range of known flame retardants. When the flame retardant composition contains a flame retardant other than the component (B1) and the component (B2), the content is not particularly limited and can be appropriately adjusted within a range that does not impair the effects of the present invention. From the viewpoint of keeping costs down, the content of the flame retardant may be 10 mass% or less, preferably 5 mass% or less, and more preferably 1 mass% or less, based on the total mass of the component (B1) and the component (B2). The flame retardant composition may contain only the component (B1) and the component (B2) as flame retardants.

### Component (C)

The component (C) contained in the flame retardant composition is fatty acid zinc. Since the flame retardant composition contains fatty acid zinc, the flame retardant composition can impart excellent flame retardancy and heat resistance to the extrusion-foamed molded article, and can particularly improve flame retardancy properties.

In the fatty acid zinc, the fatty acid moiety (the moiety other than zinc in the fatty acid zinc) may be saturated fatty acid zinc or unsaturated fatty acid zinc, and may be linear or branched. In terms of easily improving flame retardancy and heat resistance, the fatty acid zinc is preferably linear saturated fatty acid zinc, linear unsaturated fatty acid zinc, or the like.

In the fatty acid zinc, the number of carbon atoms (including carboxy carbon) in the fatty acid moiety is not particularly limited. In terms of easily improving flame retardancy and heat resistance, the number of carbon atoms in the fatty acid moiety is preferably 2 or more, more preferably 8 or more, even more preferably 10 or more, and particularly preferably 12 or more, and is also preferably 40 or less, more preferably 35 or less, even more preferably 30 or less, and particularly preferably 25 or less.

In the fatty acid zinc, the fatty acid moiety may have one or more substituents. Examples of such substituents include hydroxyl groups, carboxy groups, halon atoms, amino groups, and the like. When the fatty acid moiety has one or more substituents, the substituents are preferably hydroxyl groups. When the fatty acid moiety has one or more substituents, the number of substituents is, for example, 1 to 5, and preferably 1 to 3.

Examples of the fatty acid zinc include zinc acetate, zinc propionate, zinc octylate, zinc behenate, zinc laurate, zinc myristate, zinc palmitate, zinc stearate, zinc 12-hydroxystearate, zinc montanate, zinc oleate, and the like.

The flame retardant composition may contain the component (C) (fatty acid zinc) singly or in a combination of two or more. The component (C) can be produced by a known method or can be obtained from a commercial product or the like.

As described above, in the flame retardant composition, the content of the component (C) based on 100 parts by mass of the component (B1) is 0.1 to 15 parts by mass. That is, in the flame retardant composition, the value of {mass of component (C)/mass of component (B1)} x 100 is within the range of 0.1 to 15. This can enhance the effect of the component (B1) as a flame retardant, and excellent flame retardancy properties can be exhibited.

The content of the component (C) based on 100 parts by mass of the component (B1) is preferably 0.15 parts by mass or more, more preferably 0.2 parts by mass or more, even more preferably 0.3 parts by mass or more, and particularly preferably 0.4 parts by mass or more. The content of the component (C) based on 100 parts by mass of the component (B1) is also preferably 12 parts by mass or less, more preferably 10 parts by mass or less, even more preferably 7 parts by mass or less, and particularly preferably 4.5 parts by mass or less. The content of the component (C) based on 100 parts by mass of the component (B1) is most preferably 0.4 to 4.5 parts by mass. In this case, the flame retardant composition can improve both flame retardancy and heat resistance.

### Component (D)

The component (D) contained in the flame retardant composition is a fatty acid metal salt. However, the fatty acid metal salt (D) is other than the component (C), i.e., other than the fatty acid zinc. In short, in the component (D), the metal of the fatty acid metal salt is other than zinc.

Since the flame retardant composition contains the component (D), flame retardancy properties can be further improved, excellent heat resistance can be imparted to the extrusion-foamed molded article, and the resulting extrusion-foamed molded article has excellent moldability.

In the fatty acid metal salt, the fatty acid moiety (the moiety other than metal in the fatty acid metal salt) may be saturated fatty acid zinc or unsaturated fatty acid zinc, and may be linear or branched. In terms of easily improving flame retardancy and heat resistance, the fatty acid metal salt is preferably a linear saturated fatty acid metal salt, a linear unsaturated fatty acid metal salt, or the like.

In the fatty acid metal salt, the number of carbon atoms (including carboxy carbon) in the fatty acid moiety is not particularly limited. In terms of easily improving flame retardancy and heat resistance, the number of carbon atoms in the fatty acid moiety of the fatty acid metal salt is preferably 2 or more, more preferably 8 or more, even more preferably 10 or more, and particularly preferably 12 or more, and is also preferably 40 or less, more preferably 35 or less, even more preferably 30 or less, and particularly preferably 25 or less.

In the fatty acid metal salt, the fatty acid moiety may have one or more substituents. Examples of such substituents include hydroxyl groups, carboxy groups, halogen atoms, amino groups, and the like. When the fatty acid moiety has one or more substituents, the substituents are preferably hydroxyl groups. When the fatty acid moiety has one or more substituents, the number of substituents is, for example, 1 to 5, and preferably 1 to 3.

In the fatty acid metal salt, the type of metal is not particularly limited as long as it is a metal other than zinc. Examples include lithium, magnesium, calcium, aluminum, barium, sodium, and the like.

Examples of fatty acid metal salts include metal salts of acetic acid, propionic acid, octyl acid, behenic acid, lauric acid, myristic acid, palmitic acid, stearic acid, 12-hydroxystearic acid, montanoic acid, and oleic acid (the metal is lithium, magnesium, calcium, aluminum, barium, or sodium).

The flame retardant composition may contain the component (D) (fatty acid metal salt) singly or in a combination of two or more. The component (D) can be produced by a known method or can be obtained from a commercial product or the like.

As described above, in the flame retardant composition, the content of the component (D) based on 100 parts by mass of the component (B1) is 1 to 35 parts by mass. That is, in the flame retardant composition, the value of {mass of component (D)/mass of component (B1)} x 100 is within the range of 1 to 35. This can further enhance flame retardancy properties, excellent heat resistance can be imparted to the extrusion-foamed molded article, and the resulting extrusion-foamed molded article has excellent moldability.

The content of the component (D) based on 100 parts by mass of the component (B1) is preferably 2 parts by mass or more, more preferably 2.5 parts by mass or more, even more preferably 3 parts by mass or more, and particularly preferably 4 parts by mass or more. The content of the component (D) based on 100 parts by mass of the component (B1) is also preferably 30 parts by mass or less, more preferably 25 parts by mass or less, even more preferably 20 parts by mass or less, and particularly preferably 17 parts by mass or less. The content of the component (C) based on 100 parts by mass of the component (B1) is most preferably 4 to 17 parts by mass. In this case, the flame retardant composition can significantly improve both flame retardancy and heat resistance.

In the flame retardant composition, by combining the component (C) and the component (D) as constituent components, it is possible to improve both flame retardancy and heat resistance, which have been difficult to achieve in the past due to their trade-off relationship. Further, since the contents of these components are within specific ranges, both flame retardancy and heat resistance can be significantly improved. In addition, the moldability of the extrusion-foamed molded article is less likely to be impaired.

### Component (E)

The flame retardant composition may contain, for example, a heat stabilizer as a component (E) in addition to the components (A) to (D). It is also possible for the flame retardant composition not to contain the component (E) and for the styrene-based resin composition described later to contain the component (E). The heat stabilizer can further improve the heat stability of the foamed molded article.

The type of heat stabilizer is not particularly limited. For example, a wide range of known heat stabilizers usable for foamed molded articles can be used. Examples of heat stabilizers include thioether compounds, hindered phenol compounds, hindered amine compounds, organotin compounds, phosphoric acid esters, hydrotalcites, and the like.

Examples of thioether compounds include dilauryl-3,3'-thiodipropionate, dimyristyl-3,3'-thiodipropionate, distearyl-3,3'-thiodipropionate, pentaerythritol tetrakis(3-laurylthiopropionate), ditridecyl-3,3'-thiodipropionate, 2-mercaptobenzimidazole, and the like.

Examples of hindered phenol compounds include 1,6-hexanediol-bis[3-(3,5-di-tert-butyl-4-hydroxyphenyl)propionate], triethylene glycol-bis[3-(3-tert-butyl-5-methyl-4-hydroxyphenyl)propionate], glycerin tris[3-(3,5-di-tert-butyl-4-hydroxyphenyl)-propionate], pentaerythritol tetrakis[3-(3,5-di-tert-butyl-4-hydroxyphenyl)propionate], octadecyl-3-(3,5-di-tert-butyl-4-hydroxyphenyl)propionate, thiodiethylene bis[3-(3,5-di-tert-butyl-4-hydroxyphenyl)propionate], N,N'-hexane-1,6-diylbis[3-(3,5-di-tert-butyl-4-hydroxyphenyl)propionamide], 2,4-dimethyl-6-(1-methylpentadecyl)phenol, diethyl[[3,5-bis(1,1-dimethylethyl)-4-hydroxyphenyl]methyl]phosphonate, calcium diethylbis[[3,5-bis (1,1-dimethylethyl)-4-hydroxyphenyl]methyl]phosphonate, 3,3',3'',5,5',5''-hexa-tert-butyl-a,a',a''-(mesitylene-2,4,6-triyl)tri-p-cresol, 4,6-bis(octylthiomethyl)-o-cresol, ethylenebis(oxyethylene)bis[3-(5-tert-butyl-4-hydroxy-m-tolyl)propionate], hexamethylenebis[3-(3,5-di-tert-butyl-4-hydroxyphenyl)propionate], 1,3,5-tris(3,5-di-tert-butyl-4-hydroxybenzyl)-1,3,5-triazine-2,4,6(1H,3H,5H)-trione, 1,3,5-tris[(4-tert-butyl-3-hydroxy-2,6-xylyl)methyl]-1,3,5-triazine-2,4,6(1H,3H,5H)-trione, 2,6-di-tert-butyl-4-(4,6-bis(octylthio)-1,3,5-triazin-2-ylamino)phenol, and the like.

Examples of hindered amine compounds include 4-benzoyloxy-2,2,6,6-tetramethylpiperidine, bis(2,2,6,6-tetramethyl-4-piperidinyl)sebacate, bis(1,2,2,6,6-pentamethyl-4-piperidinyl)sebacate, bis(1,2,2,6,6-pentamethyl-4-piperidinyl)-2-(3,5-di-tert-butyl-4-hydroxybenzyl-2-n-butylmalonate), tetrakis(2,2,6,6-tetramethyl-4-piperidinyl-1,2,3,4-butanetetracarboxylate), tetrakis(1,2,2,6,6-pentamethyl-4-piperidinyl)-1,2,3,4-butanetetracarboxylate, and the like.

Examples of organotin compounds include dioctyltin dilaurate, dioctyltin maleate, and the like.

Examples of the phosphoric acid ester as the component (E) include phosphite compounds. Examples of such phosphite compounds include trimethyl phosphite, triethyl phosphite, tributyl phosphite, tri(2-ethylhexyl) phosphite, tristearyl phosphite, and like trialkyl phosphites, and also include 2-ethylhexyl diphenyl phosphite, isodecyl diphenyl phosphite, and like alkyl allyl phosphites, tris(2,4-di-tert-butylphenyl)phosphite, trinonylphenyl phosphite, bis(2,4-di-tert-butylphenyl)pentaerythritol diphosphite, bis[2,4-bis(1,1-dimethylethyl)-6-methylphenyl]ethyl phosphite, tetrakis(2,4-di-tert-butylphenyl)[1,1-biphenyl]-4,4'-diylbisphosphonite, bis(nonylphenyl)pentaerythritol diphosphite, bisstearyl pentaerythritol diphosphite, bis(2,6-di-tert-butyl-4-methylphenyl)pentaerythritol diphosphite, 2,2'-methylenebis(4,6-di-tert-butyl-1-phenyloxy) (2-ethylhexyloxy)phosphorus, tetra(tridecyl)-4,4' -butylidene-bis(2-tert-butyl-5-methylphenyl)diphosphite, hexatridecyl-1,1,3-tris(3-tert-butyl-6-methyl-4-oxyphenyl)-3-methylpropane triphosphite, mono(dinonylphenyl)mono-p-nonylphenyl phosphite, tris(monononylphenyl)phosphite, and tetra(C12-16)alkyl-4,4'-isopropylidene-(bisphenyl)diphosphite.

In the flame retardant composition, the content of the component (E) is not particularly limited, and may be a suitable amount within a range that does not impair the effects of the present invention. For example, the content of the component (E) is 0.1 to 50 mass%, and preferably 1 to 30 mass%, based on the total mass of the component (B1).

### Component (F)

The flame retardant composition may contain, for example, a flame retardancy enhancer as a component (F) in addition to the components (A) to (D). It is also possible for the flame retardant composition not to contain the component (F) and for the styrene-based resin composition described later to contain the component (F). The flame retardancy enhancer can further improve the heat stability of the foamed molded article.

The type of flame retardancy enhancer is not particularly limited. For example, a wide range of known flame retardancy enhancers usable for foamed molded articles can be used. Examples of flame retardancy enhancers include phosphoric acid esters other than the component (E). Specific examples of such phosphoric acid esters include phosphite compounds, such as triphenyl phosphite, tricresyl phosphite, diphenyl cresyl phosphite, diphenyl xylenyl phosphite, and resorcinol dixylenyl phosphite; phosphate compounds, such as triphenyl phosphate, trixylenyl phosphate, and tricresyl phosphate; and the like. Other examples of flame retardancy enhancers include cumene peroxide, cumene hydroperoxide, di-tert-butyl peroxide, di-tert-hexyl peroxide, 2,5-dimethyl-2,5-di(tert-butyl peroxy)-hexyne-3, dicumyl peroxide, 2,3-dimethyl-2,3-diphenylbutane, and the like, and also include phthalocyanine metal complexes, such as phthalocyanine iron, phthalocyanine manganese, and phthalocyanine cobalt, zeolite, and the like.

In the flame retardant composition, the content of the component (F) is not particularly limited, and may be a suitable amount within a range that does not impair the effects of the present invention. For example, the content of the component (F) is 0.1 to 15 mass%, and preferably 1 to 10 mass%, based on the total mass of the component (B1).

### Component (H)

The flame retardant composition may contain, for example, a foam nucleating agent as a component (H) in addition to the components (A) to (D). It is also possible for the flame retardant composition not to contain the component (H) and for the styrene-based resin composition described later to contain the component (H). The foam nucleating agent is useful for adjusting the strength etc. of the foamed molded article of the styrene-based resin composition because it makes it easy to form cells in the foamed molded article and also makes it easy to adjust the cell diameter.

The type of foam nucleating agent is not particularly limited. For example, a wide range of known foam nucleating agents usable for foamed molded articles can be used. Examples of foam nucleating agents include talc, bentonite, kaolin, mica, silica, clay, diatomaceous earth, and like inorganic materials.

### Other Components

The flame retardant composition may contain various other components within a range that does not impair the effects of the present invention, in addition to the above components. When the flame retardant composition contains other components, the content thereof is not particularly limited, and can be, for example, 50 mass% or less, preferably 30 mass% or less, more preferably 10 mass% or less, and even more preferably 1 mass% or less, based on the total mass of the component (B1), the component (C), and the component (D).

The method for preparing the flame retardant composition is not particularly limited, and may be, for example, the same as a method for preparing known flame retardant compositions.

### 2. Flame-Retardant Expandable Styrene-Based Resin Composition

The flame-retardant expandable styrene-based resin composition ("styrene-based resin composition") of the present invention contains the flame retardant composition and further contains a styrene-based resin as a component (A). That is, the composition contains the components (A), (B1), (C), and (D):
(A) a styrene-based resin;
(B1) tetrabromobisphenol A-bis(2,3-dibromo-2-methylpropyl ether);
(C) fatty acid zinc; and
(D) a fatty acid metal salt, excluding the component (C).
As a precautionary note, the content of the component (C) based on 100 parts by mass of the component (B1) is 0.1 to 15 parts by mass, and the content of the component (D) based on 100 parts by mass of the component (B1) is 1 to 35 parts by mass.

The styrene-based resin composition of the present invention can be formed into a foamed article by melting the composition in an extruder, introducing a foaming agent under pressure into the melt, and then extruding the melt. The foamed article has excellent flame retardancy and excellent heat resistance. That is, an extrusion-foamed molded article with excellent flame retardancy and excellent heat resistance can be produced using the styrene-based resin composition of the present invention.

The component (A) contained in the styrene-based resin composition is a styrene resin. The styrene-based resin is the main component of the styrene-based resin composition, i.e., the main component of the foamed molded article.

The type of styrene-based resin is not particularly limited. For example, a wide range of known styrene-based resins used for foam molding can be used.

Examples of styrene-based resins include homopolymers of a styrene monomer and copolymers of styrene with other monomers. Examples of the other monomers include styrene-based polymerizable monomers, such as o-methylstyrene, m-methylstyrene, p-methylstyrene, 2,4-dimethylstyrene, ethylstyrene, p-tert-butylstyrene, α-methylstyrene, α-methyl-p-methylstyrene, 1,1-diphenylethylene, p-(N,N-diethylaminoethyl)styrene, and p-(N,N-diethylaminomethyl)styrene. The other monomers may be used singly or in a combination of two or more.

The monomer units constituting the styrene-based resin may contain a styrene monomer in an amount of 50 mass% or more, preferably 70 mass% or more, more preferably 80 mass% or more, even more preferably 90 mass% or more, and particularly preferably 95 mass% or more. The styrene-based resin may be a homopolymer of polystyrene.

The styrene-based resin may also contain other components as long as the effects of the present invention are not impaired. Examples of the other components include rubbery polymers. Examples of rubbery polymers include polybutadiene, polyisoprene, styrene-butadiene copolymer, styrene-isoprene copolymer, acrylonitrile-butadiene copolymer, styrene-isobutylene-butadiene-based copolymer, butadiene-(meth)acrylate copolymer, styrene-butadiene block copolymer, styrene-isoprene block copolymer, butyl rubber, ethylene-α-olefin-based copolymer (ethylene-propylene rubber), ethylene-α-olefin-polyene copolymer (ethylene-propylene-diene rubber), silicone rubber, acrylic rubber, hydrogenated diene-based rubber (e.g., hydrogenated styrene-butadiene block copolymer and hydrogenated butadiene-based polymer), and the like.

The styrene-based resin may contain one rubbery polymer or two or more rubbery polymers. When the styrene-based resin composition contains a rubbery polymer, the content of the rubbery polymer is preferably 30 mass% or less, more preferably 20 mass% or less, and even more preferably 10 mass% or less, based on the monomer components constituting the styrene-based resin.

For example, the molecular weight of the styrene-based resin is not particularly limited, and can be adjusted to an appropriate molecular weight within the range in which foam molding is possible, depending on the intended use etc. For example, the molecular weight of the styrene-based resin may be in the same range as that of known foamed molded articles.

The styrene-based resin may further contain other additives as long as the effects of the present invention are not impaired. Examples of additives include light stabilizers, antioxidants, preservatives, surfactants, fillers such as inorganic particles, pigments, colorants, antifungal agents, and the like. One or more of these additives may be contained in the styrene-based resin. When the styrene-based resin contains other additives, the content thereof is preferably 10 mass% or less, more preferably 5 mass% or less, and even more preferably 1 mass% or less, based on the total mass of the styrene-based resin.

The method for producing the styrene-based resin is not particularly limited. For example, the styrene-based resin as the component (A) can be obtained by a known method. Alternatively, the styrene-based resin can be obtained from, for example, a commercial product.

The content of the component (B1) contained in the styrene-based resin composition is not particularly limited. The content of the component (B1) may be, for example, 0.05 parts by mass or more, preferably 0.1 parts by mass or more, more preferably 0.5 parts by mass or more, even more preferably 0.9 parts by mass or more, and particularly preferably 1 part by mass or more, based on 100 parts by mass of the styrene-based resin, in terms of easily improving flame retardancy and heat resistance. The content of the component (B1) contained in the styrene-based resin composition may also be 20 parts by mass or less, preferably 18 parts by mass or less, more preferably 10 parts by mass or less, even more preferably 5 parts by mass or less, still even more preferably 4 parts by mass or less, and particularly preferably 3 parts by mass or less, based on 100 parts by mass of the styrene-based resin, in terms of easily improving flame retardancy and heat resistance.

When the styrene-based resin composition contains both the component (B1) and the component (B2), the total mass of the component (B1) and the component (B2) is preferably, for example, 0.1 parts by mass or more and 20 parts by mass or less, based on 100 parts by mass of the styrene-based resin, in terms of easily improving the flame retardancy and heat resistance of the foamed molded article of the styrene-based resin composition. The total mass of the component (B1) and the component (B2) is preferably 1 part by mass or more, more preferably 1.5 parts by mass or more, even more preferably 2 parts by mass or more, and particularly preferably 2.5 parts by mass or more, based on 100 parts by mass of the styrene-based resin. The total mass of the component (B1) and the component (B2) is also preferably 10 parts by mass or less, more preferably 9 parts by mass or less, even more preferably 8 parts by mass or less, and particularly preferably 6 parts by mass or less, based on 100 parts by mass of the styrene-based resin.

The content of the component (C) in the styrene-based resin composition is not particularly limited. For example, the content of the component (C) may be 0.001 parts by mass or more, preferably 0.002 parts by mass or more, more preferably 0.005 parts by mass or more, even more preferably 0.01 parts by mass or more, and particularly preferably 0.02 parts by mass or more, based on 100 parts by mass of the styrene-based resin, in terms of easily improving flame retardancy and heat resistance. The content of the component (C) may also be 5 parts by mass or less, preferably 1 part by mass or less, more preferably 0.8 parts by mass or less, even more preferably 0.5 parts by mass or less, and particularly preferably 0.3 parts by mass or less, based on 100 parts by mass of the styrene-based resin, in terms of easily improving flame retardancy and heat resistance.

The content of the component (D) in the styrene-based resin composition is not particularly limited. For example, the content of the component (D) in the styrene-based resin composition is preferably 0.01 parts by mass or more, more preferably 0.02 parts by mass or more, even more preferably 0.03 parts by mass or more, and particularly preferably 0.04 parts by mass or more, based on 100 parts by mass of the styrene-based resin, in terms of easily improving flame retardancy and heat resistance. The content of the component (D) may also be 5 parts by mass or less, preferably 3 parts by mass or less, more preferably 1 part by mass or less, even more preferably 0.8 parts by mass or less, and particularly preferably 0.5 parts by mass or less, based on 100 parts by mass of the styrene-based resin.

When the styrene-based resin composition contains the component (E), the content is not particularly limited. For example, the content of the component (E) may be 0.001 parts by mass or more, preferably 0.01 parts by mass or more, more preferably 0.02 parts by mass or more, and even more preferably 0.03 parts by mass or more, based on 100 parts by mass of the styrene-based resin, in terms of easily improving the heat stability of the foamed molded article. The content of the component (E) is also preferably 1 part by mass or less, more preferably 0.8 parts by mass or less, even more preferably 0.6 parts by mass or less, and particularly preferably 0.4 parts by mass or less, based on 100 parts by mass of the styrene-based resin, in terms of easily improving the heat stability of the foamed molded article.

When the styrene-based resin composition contains the component (F), the content is not particularly limited. For example, the content of the component (F) is preferably 0.01 parts by mass or more and 0.5 parts by mass or less, based on 100 parts by mass of the styrene-based resin, in terms of easily improving the flame retardancy of the foamed molded article.

When the styrene-based resin composition contains the component (H), the content is not particularly limited. For example, the content of the component (H) may be 0.1 parts by mass or more and 5 parts by mass or less, based on 100 parts by mass of the styrene-based resin.

The styrene-based resin composition may contain various components in addition to the above components. For example, the styrene-based resin composition may contain a foaming agent, which is the component (G) described later. The foaming agent may be added to the styrene-based resin composition in the foaming step of the styrene-based resin composition described later, or a foam nucleating agent may be added to the styrene-based resin composition in advance before the styrene-based resin composition is foamed.

The styrene-based resin composition may contain various additives within a range that that does not impair the effects of the present invention. Examples of additives include known resin additives, such as light stabilizers, UV-absorbing agents, UV-stabilizing agents, heavy-metal-deactivating agents, impact-strength-improving agents, colorants, lubricants, anti-drip agents, crystal-nucleating agents, antistatic agents, and compatibilizing agents. When the styrene-based resin composition contains an additive, the content thereof may be, for example, 10 mass% or less, preferably 5 mass% or less, more preferably 1 mass% or less, and particularly preferably 0.1 mass% or less, based on the mass of the styrene-based resin.

The method for preparing the styrene-based resin composition is not particularly limited, and can be, for example, the same as a method for preparing known styrene-based resin compositions for foaming. For example, the styrene-based resin composition can be prepared by mixing the flame retardant composition, the component (A), and one or more optional components to be added, at a predetermined mixing ratio.

The styrene-based resin composition can be used to form a foamed molded article, for example, by various foaming methods. For example, an extrusion-foamed molded article of the styrene-based resin composition can be obtained by extrusion-foaming the styrene-based resin composition.

The method for producing the extrusion-foamed molded article is not particularly limited, and, for example, a wide range of known production methods can be used. For example, the extrusion-foamed molded article can be produced by a production method comprising the following extrusion foam molding step. Extrusion foaming step: melt-mixing the styrene-based resin composition in an extruder, introducing a foaming agent (G) as the component (G) under pressure into the extruder, and then extruding the mixture through the die of the extruder to the atmosphere.

The styrene-based resin is foamed and molded by the extrusion foaming step, thereby obtaining an extrusion-foamed molded article of the styrene-based resin composition.

In the extrusion foaming step, the component (A), the component (B1), the component (C), and the component (D) may be fed into the extruder in any order and melt-mixed in the extruder, and the mixture may be foamed and molded. Alternatively, some or all of the components may be mixed in advance to form a mixture, and then the mixture may be fed into the extruder.

As the foaming agent, for example, a wide range of known foaming agents usable for foam molding can be used. Specific examples include volatile organic foaming agents, such as propane, butane, isobutane, pentane, cyclopentane, hexane, cyclohexane, 1-chloro-1,1-difluoroethane, monochlorodifluoromethane, monochloro-1,2,2,2-tetrafluoroethane, 1,1-difluoroethane, 1,1,1,2-tetrafluoroethane, 1,1,3,3,3-pentafluoropropane, dichloromethane, 1,2-dichloroethane, dimethyl ether, diethyl ether, and ethyl methyl ether; inorganic foaming agents, such as water, nitrogen, and carbon dioxide; chemical foaming agents, such as azo compounds; and the like. The foaming agents may be used singly or in a combination of two or more.

The amount of the foaming agent can be appropriately set according to the properties of a desired foamed article, the molding method used, etc. For example, the amount of the foaming agent may be 0.01 to 20 parts by mass, preferably 0.1 to 10 parts by mass, and more preferably 0.5 to 5 parts by mass, based on 100 parts by mass of the styrene-based resin.

The extrusion-foamed molded article of the styrene-based resin composition obtained as described above contains at least the component (A), the component (B1), the component (C), and the component (D), and the contents of the component (C) and component (D) are each in a specific range. Thus, the extrusion-foamed molded article has excellent flame retardancy and excellent heat resistance, as well as excellent moldability. The extrusion-foamed molded article can therefore be used for various applications in which, for example, high flame retardancy levels are required.

### Examples

The present invention is described in detail below with reference to Examples; however, the present invention is not limited to these Examples.

The starting materials used in the Examples and Comparative Examples are as follows.

### Component (A)

### (A) Styrene-based resin

- GP-PS (PSJ Polystyrene G9305 produced by PS Japan Corporation)

### Component (B1)

### Tetrabromobisphenol A-bis(2,3-dibromo-2-methylpropyl ether) (PYROGUARD SR-130 produced by DKS Co. Ltd.)

### Component (B2)

- B2-1: Tetrabromobisphenol A-bis(2,3-dibromopropyl ether) (PYROGUARD SR-720N produced by DKS Co. Ltd.)
- B2-2: Tris(2,3-dibromopropyl)isocyanurate (PYROGUARD SR-750 produced by DKS Co. Ltd.)
- B2-3: Tris(tribromophenoxy)triazine (PYROGUARD SR-245 produced by DKS Co. Ltd.)
- B2-4: Brominated epoxy oligomer (SR-T1000 produced by Sakamoto Yakuhin Kogyo Co., Ltd.)

### Component (C)

### (C) Fatty acid zinc

- C-1: Zinc stearate (Zn-St produced by Nitto Chemical Industry Co., Ltd.)
- C-2: Zinc 12-hydroxystearate (ZS-6 produced by Nitto Chemical Industry Co., Ltd.)
- C-3: Zinc montanate (ZS-8 produced by Nitto Chemical Industry Co., Ltd.)
- C-4: Zinc oleate
- C-5: Zinc laurate (ZS-3 produced by Nitto Chemical Industry Co., Ltd.)

### Component (D)

### (D) Fatty acid metal salt

- D-1: Calcium stearate (Ca-St produced by Nitto Chemical Industry Co., Ltd.)
- D-2: Magnesium stearate (Mg-St produced by Nitto Chemical Industry Co., Ltd.)
- D-3: Aluminum stearate (Al-St produced by Nitto Chemical Industry Co., Ltd.)
- D-4: Lithium stearate (LI-ST produced by Nitto Chemical Industry Co., Ltd.)
- D-5: Sodium stearate (NA-ST produced by Nitto Chemical Industry Co., Ltd.)
- D-6: Calcium 12-hydroxystearate (CS-6 produced by Nitto Chemical Industry Co., Ltd.)
- D-7: Calcium laurate (CS-3 produced by Nitto Chemical Industry Co., Ltd.)
- D-8: Magnesium laurate
- D-9: Calcium montanate (CS-8 produced by Nitto Chemical Industry Co., Ltd.)
- D-10: Magnesium montanate (MS-8 produced by Nitto Chemical Industry Co., Ltd.)

### Component (E)

### (E) Heat stabilizer

### Bis(2,6-di-tert-butyl-4-methylphenyl)pentaerythritol diphosphite (ADK STAB PEP-36 produced by ADEKA Corporation)

### Component (F)

### (F) Flame retardancy enhancer

- F-1: 2,3-Dimethyl-2,3-diphenylbutane (NOFMER BC-90 produced by NOF Corporation)
- F-2: Triphenyl phosphate (TPP produced by Daihachi Chemical Industry Co., Ltd.)

### Component (G)

### (G) Foaming agent

- G-1: Isobutane
- G-2: Dimethyl ether

### Component (H)

### (H) Foam nucleating agent

- Talc MS (produced by Nippon Talc Co., Ltd.)

### Example 1

The components, except a foaming agent, were placed in an extruder with a diameter of 65 mm in the amounts shown in Table 1 below, the inside of the extruder was heated to 200°C to melt and plasticize the mixture, and kneading was continued, thereby preparing a styrene-based resin composition in the extruder. The extruder was a twin-stage extruder including an extruder with a diameter of 65 mm and an extruder with a diameter of 90 mm in series. As shown in Table 1, the amounts of the components were as follows: the amount of the component (A) was 100 parts by mass, the amount of the component (B1) was 0.9 parts by mass, the amount of B2-1 as the component (B2) was 2.1 parts by mass, the amount of C-1 as the component (C) was 0.03 parts by mass, the amount of D-1 as the component (D) was 0.1 parts by mass, and the amount of the component (E) was 0.05 parts by mass.

Subsequently, a predetermined amount of the foaming agent was introduced under pressure through a separate line to the end of the 65-mm extruder (the side opposite to the die of the extruder with a diameter of 90 mm). Then, the resin temperature (the temperature in the extruder) was cooled to 120°C in the extruder with a diameter of 90 mm. As shown in Table 1, 3 parts by mass of foaming agent G-1 and 3 parts by mass of foaming agent G-2 were used as the component (G) (based on 100 parts by mass of the styrene-based resin). Thereafter, the resin composition was extruded to the atmosphere through a die lip with a rectangular cross section of 2.5 mm (thickness direction) x 45 mm (width direction) provided at an end of the extruder with a diameter of 90 mm. An extrusion-foamed molded article of a styrene-based resin with a rectangular parallelepiped shape was thereby obtained.

### Examples 2 to 36

Extrusion-foamed molded articles were obtained in the same manner as in Example 1, except that the type and amount of each component were changed as shown in Tables 1 and 2.

### Comparative Examples 1 to 8

Extrusion-foamed molded articles were obtained in the same manner as in Example 1, except that the type and amount of each component were changed as shown in Table 3 below.

### Evaluation Method

### Flame Retardancy

The oxygen index was measured according to JISK-7201, and the flame retardancy properties were evaluated based on the following criteria.
Very good: The oxygen index was 26.5 or more, and particularly excellent flame retardancy was attained.
Good: The oxygen index was 26.0 or more and less than 26.5, and excellent flame retardancy was attained.
Poor: The oxygen index was less than 26.0, and excellent flame retardancy was not attained.

### Heat Resistance

The heat resistance of the foamed molded articles obtained in the Examples and the Comparative Examples was evaluated according to the degree of yellowing (YI: yellow index) of the foamed molded articles. Specifically, each extrusion-foamed molded article in the test was sliced with a cutter to obtain a board, and it was compressed with biaxial rolls and then cracked with a grinder. The cracked material was placed in a Labo Plastomill, melted and kneaded at 200°C, immediately taken out, and then molded into a plate shape with a thickness of 3.2 mm by using a cooling press. The plate-shaped molded article obtained as described above was heated with a hot press at 220°C for 40 minutes, and then cooled with a cooling press. The cooled plate-shaped molded article was dissolved in methylene chloride so that the content was 10 mass%. The solution was filtered through a 0.45-pm-filter, and the resulting solution was used as a heat resistance test sample. The YI value of the sample was measured by a transmission method using a spectrophotometric color difference meter (SE-6000 produced by Nippon Denshoku Industries Co., Ltd.), and the heat resistance properties were evaluated based on the following criteria.
Very good: The YI value was 10 or less, and particularly excellent heat resistance was attained.
Good: The YI value was more than 10 and 15 or less, and excellent heat resistance was attained.
Poor: The YI value was more than 15 or less, and excellent heat resistance was not attained.

### Moldability

The moldability of the foamed molded articles obtained in the Examples and Comparative Examples was evaluated based on the following criteria.
Good: The foamed article surface had no voids, protrusions, foreign matter, or discoloration, and smoothness and appearance were excellent.
Poor: The foamed article surface had at least one of voids, protrusions, foreign matter, and discoloration, and smoothness and appearance were poor.

Tables 1 and 2 show the amounts (parts by mass) of the components used in the Examples and the evaluation results of the obtained foamed molded articles.

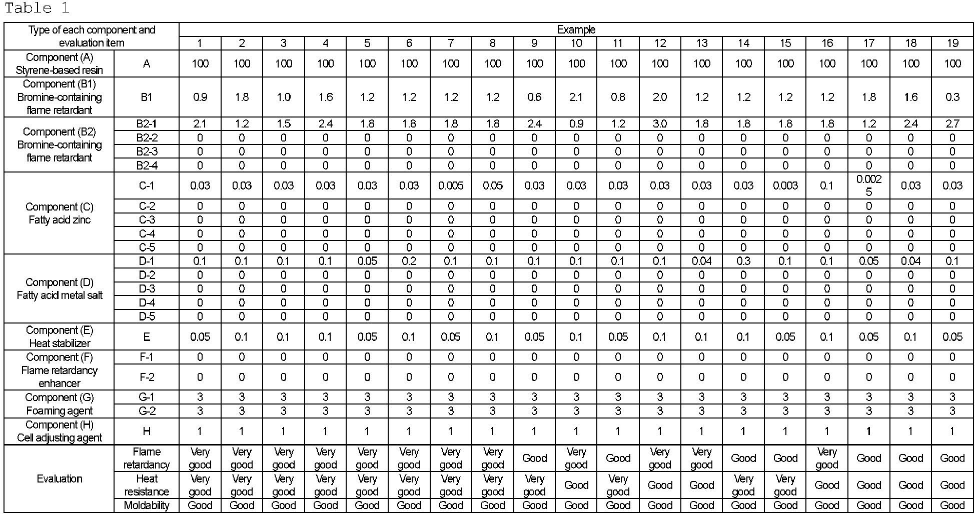

**Table 2**

| Type of each component and evaluation item | | Example | | | | | | | | | | | | | | | |
|---|---|---|---|---|---|---|---|---|---|---|---|---|---|---|---|---|---|
| | | 20 | 21 | 22 | 23 | 24 | 25 | 26 | 27 | 28 | 29 | 30 | 31 | 32 | 33 | 34 | 35 |
| Component (A) Styrene-based resin | A | 100 | 100 | 100 | 100 | 100 | 100 | 100 | 100 | 100 | 100 | 100 | 100 | 100 | 100 | 100 | 100 |
| Component (B1) Bromine-containing flame retardant | B1 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 |
| Component (B2) Bromine-containing flame retardant | B2-1 | 0 | 0 | 0 | 1.8 | 1.8 | 1.8 | 1.8 | 1.8 | 1.8 | 1.8 | 1.8 | 1.8 | 1.8 | 1.8 | 1.8 | 1.8 |
| | B2-2 | 1.8 | 0 | 0 | 0 | 0 | 0 | 0 | 0 | 0 | 0 | 0 | 0 | 0 | 0 | 0 | 0 |
| | B2-3 | 0 | 1.8 | 0 | 0 | 0 | 0 | 0 | 0 | 0 | 0 | 0 | 0 | 0 | 0 | 0 | 0 |
| | B2-4 | 0 | 0 | 1.8 | 0 | 0 | 0 | 0 | 0 | 0 | 0 | 0 | 0 | 0 | 0 | 0 | 0 |
| Component (C) Fatty acid zinc | C-1 | 0.03 | 0.03 | 0.03 | 0 | 0 | 0 | 0 | 0.03 | 0.03 | 0.03 | 0.03 | 0.03 | 0.03 | 0.03 | 0.03 | 0.03 |
| | C-2 | 0 | 0 | 0 | 0.03 | 0 | 0 | 0 | 0 | 0 | 0 | 0 | 0 | 0 | 0 | 0 | 0 |
| | C-3 | 0 | 0 | 0 | 0 | 0.03 | 0 | 0 | 0 | 0 | 0 | 0 | 0 | 0 | 0 | 0 | 0 |
| | C-4 | 0 | 0 | 0 | 0 | 0 | 0.03 | 0 | 0 | 0 | 0 | 0 | 0 | 0 | 0 | 0 | 0 |
| | C-5 | 0 | 0 | 0 | 0 | 0 | 0 | 0.03 | 0 | 0 | 0 | 0 | 0 | 0 | 0 | 0 | 0 |
| Component (D) Fatty acid metal salt | D-1 | 0.05 | 0.05 | 0.05 | 0.05 | 0.05 | 0.05 | 0.05 | 0 | 0 | 0 | 0 | 0 | 0 | 0 | 0 | 0 |
| | D-2 | 0 | 0 | 0 | 0 | 0 | 0 | 0 | 0.05 | 0 | 0 | 0 | 0 | 0 | 0 | 0 | 0 |
| | D-3 | 0 | 0 | 0 | 0 | 0 | 0 | 0 | 0 | 0.05 | 0 | 0 | 0 | 0 | 0 | 0 | 0 |
| | D-4 | 0 | 0 | 0 | 0 | 0 | 0 | 0 | 0 | 0 | 0.05 | 0 | 0 | 0 | 0 | 0 | 0 |
| | D-5 | 0 | 0 | 0 | 0 | 0 | 0 | 0 | 0 | 0 | 0 | 0.05 | 0 | 0 | 0 | 0 | 0 |
| | D-6 | 0 | 0 | 0 | 0 | 0 | 0 | 0 | 0 | 0 | 0 | 0 | 0.05 | 0 | 0 | 0 | 0 |
| | D-7 | 0 | 0 | 0 | 0 | 0 | 0 | 0 | 0 | 0 | 0 | 0 | 0 | 0.05 0 | 0 0.05 | 0 | 0 |
| | D-8 | 0 | 0 | 0 | 0 | 0 | 0 | 0 | 0 | 0 | 0 | 0 | 0 | 0 | 0 | 0.05 | 0 |
| | D-9 | 0 | 0 | 0 | 0 | 0 | 0 | 0 | 0 | 0 | 0 | 0 | 0 | 0 | 0 | 0 | 0.05 |
| | D-10 | 0 | 0 | 0 | 0 | 0 | 0 | 0 | 0 | 0 | 0 | 0 | 0 | 0 | 0 | 0 | 0 |
| Component (E) Heat stabilizer | E | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 |
| Component (F) Flame retardancy enhancer | F-1 | 0.1 | 0 | 0 | 0 | 0 | 0 | 0 | 0 | 0 | 0 | 0 | 0 | 0 | 0 | 0 | 0 |
| | F-2 | 0 | 0.5 | 0 | 0 | 0 | 0 | 0 | 0 | 0 | 0 | 0 | 0 | 0 | 0 | 0 | 0 |
| Component (G) Foaming agent | G-1 | 3 | 3 | 3 | 3 | 3 | 3 | 3 | 3 | 3 | 3 | 3 | 3 | 3 | 3 | 3 | 3 |
| | G-2 | 3 | 3 | 3 | 3 | 3 | 3 | 3 | 3 | 3 | 3 | 3 | 3 | 3 | 3 | 0 | 0 |
| Component (H) Cell adjusting agent | H | 1 | 1 | 1 | 1 | 1 | 1 | 1 | 1 | 1 | 1 | 1 | 1 | 1 | 1 | 1 | 1 |
| Evaluation | Flame retardancy | Good | Very good | Good | Very good | Very good | Very good | Very good | Very good | Very good | Very good | Very good | Very good | Very good | Very good | Very good | Very good |
| | Heat resistance | Very good | Very good | Very good | Very good | Very good | Very good | Very good | Very good | Very good | Very good | Very good | Very good | Very good | Very good | Very good | Very good |
| | Moldability | Good | Good | Good | Good | Good | Good | Good | Good | Good | Good | Good | Good | Good | Good | Good | Good |

Table 3 show the amounts of the components used in the Comparative Examples and the evaluation results of the obtained foamed molded articles. In Tables 1 to 3, "(C/B1)*100" and "(D/B1)*100" respectively refer to the content of the component (C) based on 100 parts by mass of the component (B1) and the content of the component (D) based on 100 parts by mass of the component (B1).

**Table 3**

| Type of each component and evaluation item | | Comparative Example | | | | | | | |
|---|---|---|---|---|---|---|---|---|---|
| | | 1 | 2 | 3 | 4 | 5 | 6 | 7 | 8 |
| Component (A) Styrene-based resin | A | 100 | 100 | 100 | 100 | 100 | 100 | 100 | 100 |
| Component (B1) Bromine-containing flame retardant | B1 | 1.2 | 1.2 | 1.2 | 1.2 | 0 | 0 | 0 | 0 |
| Component (B2) Bromine-containing flame retardant | B2-1 | 1.8 | 1.8 | 1.8 | 1.8 | 3 | 0 | 0 | 0 |
| | B2-2 | 0 | 0 | 0 | 0 | 0 | 3 | 0 | 0 |
| | B2-3 | 0 | 0 | 0 | 0 | 0 | 0 | 3 | 0 |
| | B2-4 | 0 | 0 | 0 | 0 | 0 | 0 | 0 | 3 |
| Component (C) Fatty acid zinc | C-1 | 0 | 0.03 | 0.03 | 0 | 0.03 | 0.03 | 0.03 | 0.03 |
| | C-2 | 0 | 0 | 0 | 0 | 0 | 0 | 0 | 0 |
| | C-3 | 0 | 0 | 0 | 0 | 0 | 0 | 0 | 0 |
| | C-4 | 0 | 0 | 0 | 0 | 0 | 0 | 0 | 0 |
| | C-5 | 0 | 0 | 0 | 0 | 0 | 0 | 0 | 0 |
| Component (D) Fatty acid metal salt | D-1 | 0 | 0 | 0.5 | 0.1 | 0.1 | 0.1 | 0.1 | 0.1 |
| | D-2 | 0 | 0 | 0 | 0 | 0 | 0 | 0 | 0 |
| | D-3 | 0 | 0 | 0 | 0 | 0 | 0 | 0 | 0 |
| | 0-4 | 0 | 0 | 0 | 0 | 0 | 0 | 0 | 0 |
| | D-5 | 0 | 0 | 0 | 0 | 0 | 0 | 0 | 0 |
| Component (E) Heat stabilizer | E | 0 | 0.1 | 0.1 | 0 | 0.1 | 0.1 | 0 | 0 |
| Component (F) Flame retardancy enhancer | F-1 | 0 | 0 | 0 | 0 | 0 | 0 | 0 | 0 |
| | F-2 | 0 | 0 | 0 | 0 | 0 | 0 | 0 | 0 |
| Component (G) Foaming agent | G-1 | 3 | 3 | 3 | 3 | 3 | 3 | 3 | 3 |
| | G-2 | 3 | 3 | 3 | 3 | 3 | 3 | 3 | 3 |
| Component (H) Cell adjusting agent | H | 1 | 1 | 1 | 1 | 1 | 1 | 1 | 1 |
| Evaluation | Flame retardancy | Poor | Good | Poor | Poor | Poor | Poor | Poor | Poor |
| | Heat resistance | Good | Poor | Good | Very good | Good | Good | Good | Good |
| | Moldability | Good | Poor | Good | Good | Good | Good | Good | Good |

As is clear from Tables 1 and 2, the extrusion-foamed articles of styrene-based resin prepared in the Examples had excellent flame retardancy and were also excellent in heat resistance. In addition, the extrusion-foamed articles obtained in the Examples had excellent moldability. In contrast, since the extrusion-foamed articles of styrene-based resin prepared in the Comparative Examples were not formed from a composition containing all of the components (A) to (D), none of them satisfied both flame retardancy and heat resistance. In particular, a comparison between Comparative Examples 1 to 4 and the Examples reveals that containing specific amounts of both the components (C) and (D) is important to significantly improve flame retardancy and heat resistance, which have a trade-off relationship with each other.

## Claims

1. A flame retardant composition for expandable styrene resin, comprising at least the following components (B1), (C), and (D):
(B1) tetrabromobisphenol A-bis(2,3-dibromo-2-methylpropyl ether);
(C) fatty acid zinc; and
(D) a fatty acid metal salt, excluding the component (C),
the component (C) being contained in an amount of 0.1 to 15 parts by mass based on 100 parts by mass of the component (B1), and
the component (D) being contained in an amount of 1 to 35 parts by mass based on 100 parts by mass of the component (B1) .

2. The flame retardant composition for expandable styrene resin according to claim 1, wherein the flame retardant composition comprises a component (B2) as a flame retardant in addition to the component (B1), and the component (B2) is a bromine-containing flame retardant.

3. The flame retardant composition for expandable styrene resin according to claim 1 or 2, wherein the component (B2) comprises at least one member selected from the group consisting of tetrabromobisphenol A-bis(2,3-dibromopropyl ether), tris(2,3-dibromopropyl)isocyanurate, tris(tribromophenoxy)triazine, and brominated epoxy oligomer.

4. The flame retardant composition for expandable styrene resin according to claim 2 or 3, wherein the content of the component (B1) is 10 to 99 mass% based on the total amount of the component (B1) and the component (B2).

5. A flame-retardant expandable styrene-based resin composition comprising the flame retardant composition for expandable styrene resin according to any one of claims 1 to 4, and a styrene-based resin as a component (A).

6. An extrusion-foamed molded article of the flame-retardant expandable styrene-based resin composition according to claim 5.
